# FASCICULE DE BREVET EUROPEEN

(11) **EP 2 889 795 B1**
(45) Date de publication et mention de la délivrance du brevet: **30.11.2016**
(21) Numéro de dépôt: 14200269.0
(22) Date de dépôt: 24.12.2014
(51) Int. Cl.: G06F 21/53, G06F 21/55, G06F 21/85

(54) **Equipement de sécurité de cloisonnement entre des premier et second domaines, augmenté d'une fonctionnalité d'audit**
Sicherheitsgerät mit zusätzlicher Auditfunktion zur Abschirmung zwischen ersten und zweiten Bereichen
Safety device partitioning between first and second domains, enhanced with audit functionality

(30) Priorité: 24.12.2013 FR 1303075
(43) Date de publication de la demande: 01.07.2015
(73) Titulaire: Thales, 92200 Neuilly Sur Seine (FR)
(72) Inventeur: Lacroix, Jean-Marc, 92622 GENNEVILLIERS (FR); Curo, Franck, 92622 GENNEVILLIERS (FR); Ragot, Dominique, 92622 GENNEVILLIERS (FR); Thierry, Philippe, 92622 GENNEVILLIERS (FR); Germain, Fabien, 92622 GENNEVILLIERS (FR)
(74) Mandataire: Lavoix

(56) Documents cités:
- FR-A1- 2 939 540
- KEVIN MULLER ET AL: "MILS-related information flow control in the avionic domain: A view on security-enhancing software architectures", DEPENDABLE SYSTEMS AND NETWORKS WORKSHOPS (DSN-W), 2012 IEEE/IFIP 42ND INTERNATIONAL CONFERENCE ON, IEEE, 25 juin 2012 (2012-06-25), pages 1-6, XP032221975, DOI: 10.1109/DSNW.2012.6264665 ISBN: 978-1-4673-2264-5
- "WIND RIVER VXWORKS MILS PLATFORM 3.0 TABLE OF CONTENTS Run-Time Components", , 13 juin 2013 (2013-06-13), XP055125417, Extrait de l'Internet: URL:https://web.archive.org/web/2013061309 0136/http://www.windriver.com/products/pla tforms/vxworks-mils/MILS-3_PN.pdf [extrait le 2014-06-26]
- Karen Kent ET AL: "Guide to Computer Security Log Management - NIST Special Publication 800-92", , 5 novembre 2006 (2006-11-05), XP055125423, Extrait de l'Internet: URL:https://web.archive.org/web/2006110517 0344/http://csrc.nist.gov/publications/nis tpubs/800-92/SP800-92.pdf [extrait le 2014-06-26]

## Description

La présente invention concerne un équipement de sécurité pour cloisonner les transferts de données entre des premier et second domaines, comportant : une couche matérielle, comportant un moyen de calcul, comportant un processeur et un mécanisme matériel de compartimentation de la mémoire, et un moyen de mémorisation ; une couche de virtualisation de la couche matérielle, comportant un noyau et un hyperviseur ; et une couche applicative, comportant : un premier composant d'interface, pour échanger des données avec le premier domaine ; un second composant d'interface pour échanger des données avec le second domaine ; et un composant de sécurité formant un sas d'échange de données entre les premier et second composants, l'hyperviseur réalisant un partitionnement temporel de l'exécution des composants, et le mécanisme matériel de compartimentation de la mémoire réalisant un partitionnement spatial des composants.

Dans le domaine de la sécurité des systèmes d'information, le document FR 2008 006839 B1 divulgue un équipement de sécurité du type précité propre à réaliser un cloisonnement entre des premier et second domaines. Un tel équipement de sécurité est par exemple utilisé entre un premier domaine dont le niveau de sécurité est bas, et un second domaine dont le niveau de sécurité est haut.

Dans le présent document, le terme de « domaine » est à prendre au sens large : il peut s'agir d'un ou plusieurs autre(s) équipement(s) informatique(s), connecté(s) à l'équipement de sécurité via une liaison de communication adaptée. Il peut également s'agir d'un programme associé à une partition et exécuté sur l'équipement de sécurité considéré.

Lors de la survenue d'une attaque cybernétique, le composant de sécurité de l'équipement de sécurité est l'objet d'une tentative de contournement, destinée à faire fonctionner l'équipement de sécurité hors de son mode nominal.

Par exemple, le composant de sécurité peut avoir une fonction de diode : il autorise l'échange de paquets de données du premier domaine, moins sécurisé, vers le second domaine, plus sécurisé, mais interdit l'échange de paquets de données dans le sens inverse, c'est-à-dire du second domaine vers le premier domaine, un paquet de données, provenant d'un émetteur du premier domaine, est placé dans un espace de stockage d'entrée. Lorsqu'il est exécuté, le composant de sécurité lit les paquets placés dans l'espace de stockage d'entrée et les écrits dans un espace de stockage de sortie, qui est accessible par un récepteur du second domaine.

Par exemple encore, le composant de sécurité peut avoir une fonction cryptographique : il est propre à chiffrer les paquets de données provenant du premier domaine et placés dans l'espace de stockage d'entrée, avant de placer les paquets chiffrés dans l'espace de stockage de sortie pour être accessibles depuis le second domaine. Réciproquement, il est propre à déchiffrer les paquets de données provenant du second domaine avant de les transmettre vers le premier domaine.

Le partitionnement spatial des espaces de stockage d'entrée et de sortie, ainsi que le partitionnement temporel de l'exécution du composant de sécurité assurent le cloisonnement.

Une tentative de contournement d'un tel composant de sécurité peut alors consister à faire en sorte que le récepteur du second domaine lit, à une vitesse qui varie dans le temps, les paquets de données de l'espace de stockage de sortie, de manière à générer, par remplissage successif de l'espace de stockage de sortie et, par conséquent, de l'espace de stockage d'entrée, un message d'information du second domaine vers le premier domaine. Le composant de sécurité est alors dans l'obligation de détruire des paquets lorsque son espace de stockage de sortie est plein, afin de ne pas transmettre d'information au premier domaine sur l'état de cet espace de stockage de sortie

Par l'article de K. MULLER et al. « MILS-related information flow control in the avionic domain : a view on security-enhancing software architectures", DEPENDABLE SYSTEMS AND NETWORK WORKSHOPS (DSN-W), 2012 IEEE/IFIP 42nd INTERNATIONALCONFERENCE ON, IEEE, 25 juin 2012 (2012-06-25), pages 1 - 6, on connaît une passerelle comportant un module, par exemple de filtrage ou de transfert, pouvant fournir des informations additionnelles à un module d'audit externe à la passerelle.

L'invention a donc pour but de pallier ce problème.

A cet effet, l'invention a pour objet un équipement du type précité, caractérisé en ce que le composant de sécurité comporte un moyen de génération de métadonnées de fonctionnement et un moyen d'écriture de ces métadonnées dans une mémoire d'audit partagée du moyen de mémorisation, et en ce que la couche applicative comporte en outre un composant d'audit, comportant un moyen de lecture des métadonnées dans ladite mémoire partagée et un moyen de traitement des métadonnées lues.

En dotant le composant de sécurité d'une fonctionnalité d'audit, prenant la forme de moyens de génération de métadonnées par le composant de sécurité et d'un composant d'audit dont l'exécution est ségréguée temporellement de celle du composant d'audit afin de respecter le cloisonnement réalisé par l'équipement de sécurité, il est possible de mettre en oeuvre, en ligne ou hors ligne, des stratégies de surveillance du bon fonctionnement du composant de sécurité, indépendamment de sa charge et de son comportement.

Suivant des modes particuliers de réalisation, l'équipement comporte une ou plusieurs des caractéristiques suivantes :
- le moyen de traitement des métadonnées lues est propre à générer des indicateurs relatifs au fonctionnement du composant de sécurité.
- en ce que le moyen de traitement comporte un pilote d'interface pour une transmission des métadonnées lues à un équipement de surveillance distant, connecté audit équipement de sécurité.
- une durée d'exécution du composant d'audit est contrainte, de préférence à 5 % du temps CPU par trame.
- le composant de sécurité constitue une diode, un moyen cryptographique, un filtre, etc.
- le composant de sécurité à des droits « d'écriture seulement » dans la mémoire d'audit et en ce que le composant d'audit à des droits « de lecture seulement » dans la mémoire d'audit.
- les composants de sécurité et d'audit sont des composants du type composant d'application.

L'invention sera mieux comprise à la lecture de la description qui va suivre d'un mode de réalisation, donné uniquement à titre d'exemple illustratif et non limitatif, la description étant faite en se référant aux dessins annexés sur lesquels :
- la Figure 1 est une vue schématique d'un équipement de sécurité selon l'invention ; et,
- la Figure 2 est un graphe temporel représentant l'exécution des différents composants de l'équipement de la figure 1.

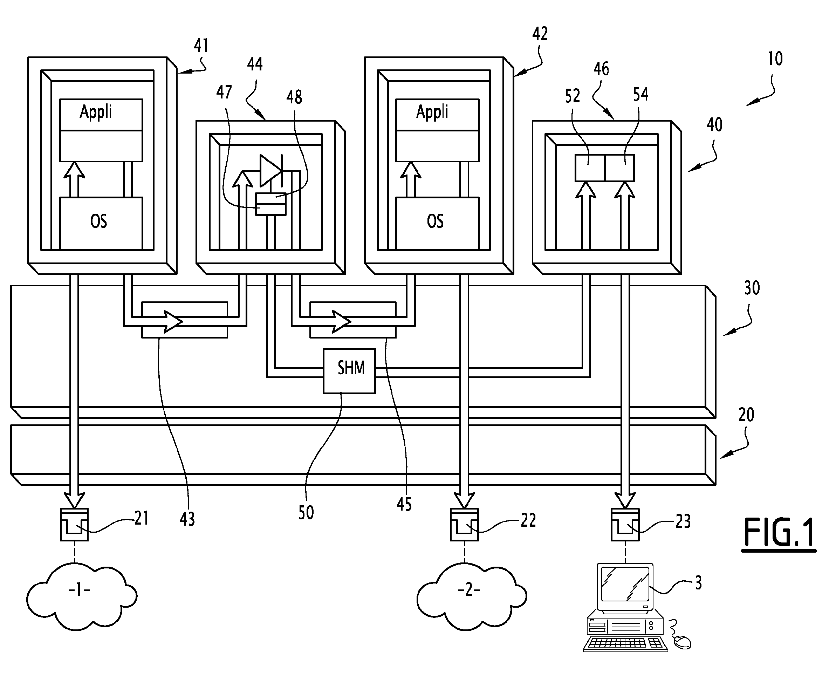

Sur la Figure 1 est représenté un équipement de sécurité 10 établissant un cloisonnement dans l'échange de paquets de données entre des premier et second domaines 1 et 2.

Un tel équipement de sécurité est avantageusement utilisé lorsque les premier et second domaines possèdent des niveaux de sécurité différents, le premier domaine présentant par exemple un niveau de sécurité « bas », plus faible que le niveau de sécurité « haut » du second domaine.

Ceci justifie la mise en oeuvre, par le composant de sécurité 10, d'une politique de sécurité asymétrique entre les paquets de données circulant du premier domaine vers le second domaine et ceux circulant du second domaine vers le premier domaine.

Dans le mode de réalisation décrit ici en détail, le composant de sécurité est une diode, autorisant la transmission de paquets de données d'un émetteur du premier domaine 1 vers un récepteur du second domaine 2, et interdit tout échange de paquets de données du second domaine 2 vers le premier domaine 1.

L'équipement de sécurité 10 comporte une couche matérielle 20, une couche de virtualisation 30 et une couche applicative 40.

La couche matérielle 20 comporte un moyen de calcul, comportant un processeur et un mécanisme matériel de compartimentation de la mémoire, appelé MMU (selon l'acronyme anglais « Memory Management Unit »), et un moyen de mémorisation, comportant une mémoire vive (RAM).

La couche matérielle 20 comporte également des moyens d'interface d'entrée/sortie. Par exemple, l'équipement de sécurité 10 comporte une première interface du type ETHERNET 21 pour la connexion au premier domaine 1 et une seconde interface du type EHERNET 22 pour la connexion au second domaine 2. L'équipement de sécurité 10 comporte également une troisième interface du type ETHERNET pour la connexion à un équipement d'audit 3.

La couche physique 20 comporte enfin un bus physique de communication entre les moyens de calcul, de mémorisation et d'interface.

La couche de virtualisation 30 comporte un noyau et un hyperviseur.

De manière connue en soi, le noyau permet le partitionnement spatial de la mémoire vive par l'allocation (« mapping » en anglais), à chaque composant de la couche applicative 40, d'un espace dans la mémoire vive.

L'hyperviseur permet la virtualisation de la couche matérielle et la gestion du partitionnement temporel, en allouant une fraction du temps d'utilisation du moyen de calcul à chaque composant de la couche applicative 40 conformément à un plan d'ordonnancement défini lors de la configuration de l'équipement de sécurité.

La couche applicative 40 comporte une pluralité de composants logiciels.

Un premier type de composant logiciel, dit d'application, intègre uniquement un programme applicatif Appli, propre à accéder directement aux ressources matérielles.

Un second type de composant logiciel, dit de système d'exploitation, intègre un système d'exploitation OS, tel que le système LINUX, et éventuellement un ou plusieurs programmes applicatifs Appli, propre à accéder aux ressources matérielles mais à travers le système d'exploitation OS.

Ainsi, un composant de système d'exploitation est riche, au sens où de nombreuses fonctionnalités sont implémentées par défaut. Le programme applicatif d'un composant de système d'exploitation utilise certaines des fonctionnalités disponibles par simple appel aux fonctions correspondantes.

Un système d'exploitation est par conséquent un programme complexe, qui comporte quelques centaines de milliers de lignes de code. Il n'est donc pas possible d'évaluer et donc de certifier un système d'exploitation. Il n'est par conséquent pas possible d'évaluer un composant de système d'exploitation. De ce fait, un composant de système d'exploitation est susceptible de présenter des failles de sécurité.

En revanche, un composant d'application, développé spécifiquement pour mettre en oeuvre une fonctionnalité précise, comporte un petit nombre de lignes de codes (quelques dizaines), de sorte qu'il est possible d'en évaluer très précisément les performances en termes de sécurité.

En particulier, le chemin de communication utilisé par un composant d'application lui est attribué par configuration de l'équipement de sécurité.

Un composant d'application est donc un composant parfaitement certifiable.

Dans le mode de réalisation représenté sur la figure 1, la couche applicative comporte des premier et second composants d'interface, 41 et 42, qui sont des composants de système d'exploitation, et des composants de sécurité et d'audit, respectivement 44 et 46, qui sont des composants d'application. Les composants de sécurité et d'audit sont par conséquent parfaitement certifiables.

Le premier composant d'interface 41 est dédié à l'échange de paquets de données avec le premier domaine 1. Il comporte en particulier les pilotes nécessaires à la communication, à travers la première interface 21, avec le premier domaine 1 selon le protocole ETHERNET. Bien évidemment, les principes d'architecture décrits ici ne se limitent pas à ce protocole particulier, et de nombreuses variantes sont envisageables.

Lorsqu'il est exécuté par le moyen de calcul, le premier composant d'interface 41 place les paquets de données provenant du premier domaine 1 dans un espace de stockage « émetteur » de la mémoire vive, représentée schématiquement sur la figure 1 et référencée par le chiffre 43.

De manière similaire, le second composant d'interface 42 est dédié à l'échange de données avec le second domaine 2. Il comporte, en tant que programme d'application, les pilotes nécessaires à la communication, à travers la seconde interface 22, avec le second domaine 2. Lorsqu'il est exécuté par le moyen de calcul, le second composant d'interface 42 accède à un espace de stockage « récepteur » de la mémoire vive et émet les paquets lus vers le second domaine 2. L'espace de stockage « récepteur » est représentée schématiquement sur la figure 1 et référencée par le chiffre 45.

Le composant de sécurité 44 forme un sas d'échange des paquets de données entre les premier et second composants d'interface 41 et 43. Dans le mode de réalisation décrit ici en détail, le composant de sécurité du type diode, réalise un transfert de données asynchrone assurant la non-visibilité du récepteur par l'émetteur.

Il est propre à lire un paquet de données placé dans l'espace de stockage « émetteur » 43.

Il est propre à écrire un paquet de données dans l'espace de stockage « récepteur » 45.

Le composant de sécurité 44 comporte, en outre, un moyen de génération 47 propre à générer des métadonnées, de nature à caractériser le fonctionnement du composant de sécurité 44.

Le composant de sécurité 44 comporte un moyen d'écriture 48 des métadonnées générées, dans une mémoire d'audit 50 partagée de la mémoire vive. Aucune contrainte temporelle n'existe sur la plage d'adresses associée à la mémoire d'audit lors de l'initialisation de l'équipement de sécurité 10. Le composant de sécurité 44 possède des droits d'«écriture seulement» dans la mémoire d'audit 50.

Ainsi, lorsqu'il est exécuté par le moyen de calcul, pour chaque paquet de données de la pile « émetteur » 43 de la mémoire vive, le composant de sécurité 44 lit le paquet de données. Si l'espace de stockage « récepteur » 45 de la mémoire vive n'est pas plein, le composant de sécurité 44 écrit le paquet de données dans l'espace de stockage « récepteur » 45. Si, en revanche, l'espace de stockage « récepteur » 45 de la mémoire vive est plein, le composant de sécurité 44 détruit le paquet de données et génère par exemple une métadonnée d'audit caractérisant cet événement. La métadonnée générée est écrite dans un espace mémoire, identifiée à une adresse, de la mémoire d'audit 50.

Le composant d'audit 46 comporte une application d'audit comportant un moyen de lecture 52, propre à accéder en «lecture seulement» à la mémoire d'audit 50, de manière à lire une métadonnée.

Le composant d'audit 46 comporte un moyen de traitement 54 propre à générer un ou plusieurs indicateur(s) caractéristique(s), relatif(s) au fonctionnement du composant de sécurité, à partir des métadonnées lues.

Dans le mode de réalisation représenté sur la figure 1, le composant d'audit est réparti, le moyen de traitement étant implémenté sur un équipement de surveillance 3 distant, connecté à l'équipement de sécurité 10, surveillé, par une connexion (par exemple ETHERNET) adaptée.

Le moyen de traitement 54 comporte ainsi les pilotes nécessaires à la communication des métadonnées lues, vers l'équipement de surveillance 3, à travers la troisième interface 23 de la couche matérielle.

Par exemple, la métadonnée générée par le composant de sécurité lorsqu'il détruit un paquet de données correspond à la date à laquelle survient cet événement.

L'équipement de surveillance 3 collecte ainsi les dates de chaque événement de destruction de paquet, et génère un indicateur prenant par exemple la forme d'un histogramme représentant le nombre de destructions de paquets par pas de temps.

D'autres types de métadonnées sont envisageables, tels que le flux de données sur l'espace de stockage « émetteur », la taille des paquets transmis vers le second domaine, etc.

Il est important de souligner que le composant de sécurité 44 écrit les métadonnées qu'il génère dans une mémoire d'audit 50 partagée avec le composant d'audit 46. Le composant de sécurité 44 est le seul à posséder les droits en écriture. Puisque l'écriture a priorité sur la lecture, le comportement du composant de sécurité 44 ne peut pas être perturbé par le comportement du composant d'audit 46, contrairement à ce qui serait le cas si par exemple l'échange des métadonnées s'effectuait par une pile ou une mémoire de type FIFO.

Selon l'invention, le composant de sécurité 44 écrit la métadonnée courante à une adresse de la mémoire d'audit 50 partagée, en écrasant la métadonnée qui y était préalablement écrite, que celle-ci ait été ou n'ait pas été lue par le composant d'audit 46. Ainsi, le comportement du composant de sécurité 44 n'est pas du tout impacté par le comportement du composant d'audit 46. De cette manière, l'audit ne dégrade pas les performances, en termes de cloisonnement et de sécurité entre les premier et second domaines, de l'équipement de sécurité 10.

L'hyperviseur réalise un partitionnement temporel de l'exécution des composants, et, en particulier, des composants de sécurité et d'audit entre eux.

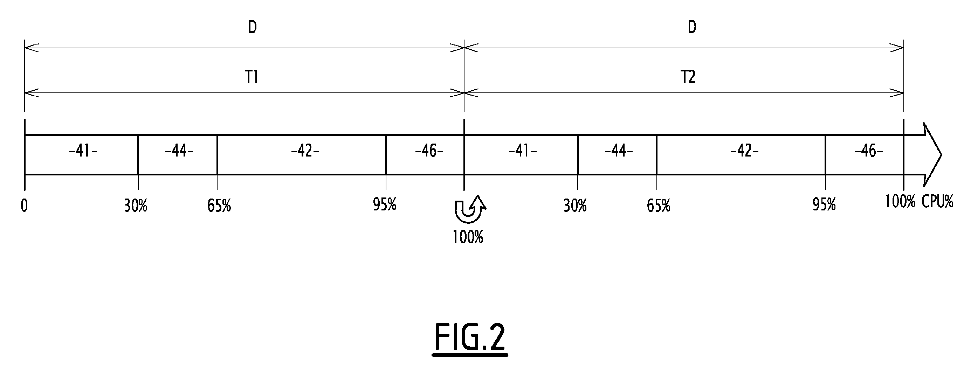

Sur la figure 2, l'enchaînement temporel de l'exécution des différents composants de l'équipement de sécurité 10 est représenté au cours d'une trame T1, et de la trame suivante T2. Les trames possèdent une durée D constante prédéterminée.

Il est à noter que l'ordonnancement de l'exécution des composants est identique d'une trame à l'autre. Cet ordonnancement temporel est défini par une partition d'initialisation exécutée, une seule fois, au démarrage du composant de sécurité 10. La partition d'initialisation n'est pas représentée sur la figure 1.

Sont successivement exécutés, le premier composant d'interface 41, le composant de sécurité 44, le second composant d'interface 42 et le composant d'audit 46.

Au cours de son exécution, le composant de sécurité 44 génère des métadonnées et les écrit dans la mémoire d'audit 50 partagée.

Au cours de son exécution, le composant d'audit 46 peut lire les métadonnées écrites par le composant de sécurité 44 dans la mémoire d'audit 50, au cours de la trame considérée.

Dans ce mode d'exécution, les composants sont exécutés chacun à la suite de l'autre pendant une durée en terme de taux d'utilisation du moyen de calcul, contrôlée par l'hyperviseur. Cette durée est avantageusement prédéfinie à l'initialisation par la partition d'initialisation.

Ainsi la durée allouée au composant d'audit est contrainte, par exemple à 5 % du temps CPU (« %CPU » sur la figure 2).

Ainsi, l'exécution du composant d'audit 46 est bornée temporellement et spatialement. Le comportement du composant d'audit est donc garanti.

En variante, l'exécution d'un composant peut être fractionnée en exécutions élémentaires au cours de la trame considérée, à condition que l'addition des durées des exécutions élémentaires ne dépasse pas la durée allouée au composant.

En variante, la fonctionnalité d'audit peut être appliquée à des composants de sécurité réalisant d'autre fonctionnalité de cloisonnement entre les premier et second domaines.

La fonctionnalité d'audit dont est muni l'équipement de sécurité permet de détecter des comportements anormaux du composant de sécurité, probablement dus à une attaque cybernétique. Eventuellement, une typologie de ces comportements anormaux peut être établie en fonction de la nature de l'attaque sur l'équipement de sécurité.

## Revendications

1. Equipement de sécurité (10) pour cloisonner les transferts de données entre des premier et second domaines (1, 2), comportant :
- une couche matérielle (20), compotant un moyen de calcul, comportant un processeur et un mécanisme matériel de compartimentation de la mémoire, et un moyen de mémorisation ;
- une couche de virtualisation (30) de la couche matérielle, comportant un noyau et un hyperviseur ;
- une couche applicative (40) comportant :
- un premier composant d'interface (41), pour échanger des données avec le premier domaine ;
- un second composant d'interface (42) pour échanger des données avec le second domaine ;
- un composant de sécurité (44) formant un sas d'échange de données entre les premier et second composants,
l'hyperviseur réalisant un partitionnement temporel de l'exécution des composants, et le mécanisme matériel de compartimentation de la mémoire réalisant un partitionnement spatial des composants,
**caractérisé en ce que** le composant de sécurité (44) comporte un moyen (47) de génération de métadonnées de fonctionnement et un moyen (48) d'écriture de ces métadonnées dans une mémoire d'audit (50) partagée du moyen de mémorisation, et **en ce que** la couche applicative (40) comporte en outre un composant d'audit (46), comportant un moyen (52) de lecture des métadonnées dans ladite mémoire partagée et un moyen (54) de traitement des métadonnées lues,
et **en ce que** le composant de sécurité (44) à des droits « d'écriture seulement » dans la mémoire d'audit (50) et **en ce que** le composant d'audit (46) à des droits « de lecture seulement » dans la mémoire d'audit (50).

2. Equipement de sécurité selon la revendication 1, **caractérisé en ce que** le moyen (54) de traitement des métadonnées lues est propre à générer des indicateurs relatifs au fonctionnement du composant de sécurité.

3. Equipement de sécurité selon la revendication 1, **caractérisé en ce que** le moyen (54) de traitement comporte un pilote d'interface pour une transmission des métadonnées lues à un équipement de surveillance (3) distant, connecté audit équipement de sécurité (10).

4. Equipement de sécurité selon l'une quelconque des revendications 1 à 3,
**caractérisé en ce qu'**une durée d'exécution du composant d'audit (46) est contrainte, de préférence à 5 % du temps CPU par trame.

5. Equipement de sécurité selon l'une quelconque des revendications 1 à 4,
**caractérisé en ce que** le composant de sécurité (44) constitue une diode, un moyen cryptographique, un filtre, etc.

6. Equipement de sécurité selon l'une quelconque des revendications 1 à 5,
**caractérisé en ce que** les composants de sécurité (44) et d'audit (46) sont des composants du type composant d'application.

## Patentansprüche

1. Sicherheitsgerät (10) zum Abtrennen von Datentransfers zwischen einem ersten Bereich und einem zweiten Bereich (1, 2) aufweisend:
- eine materielle Schicht (20), die ein Berechnungsmittel aufweist, aufweisend einen Prozessor und einen materiellen Mechanismus zum Aufteilen von Speicher und ein Speichermittel;
- eine Virtualisierungsschicht (30) der materiellen Schicht, aufweisend einen Kern und einen Hypervisor,
- eine Applikationsschicht (40) aufweisend:
- eine erste Schnittstellenkomponente (41) zum Austauschen von Daten mit dem ersten Bereich;
- eine zweite Schnittstellenkomponente (42) zum Austauschen von Daten mit dem zweiten Bereich;
- eine Sicherheitskomponente (44), die eine Schleuse zum Austausch von Daten zwischen der ersten Komponente und der zweiten Komponente bildet,
wobei der Hypervisor eine zeitliche Partitionierung der Ausführung der Komponenten realisiert und der materielle Mechanismus zum Aufteilen von Speicher eine räumliche Partitionierung der Komponenten realisiert,
dadurch charakterisiert, dass die Sicherheitskomponente (44) ein Mittel (47) zum Erzeugen von Funktionsmetadaten und ein Mittel (48) zum Schreiben dieser Metadaten in einen Prüfspeicher (50), getrennt von den Speichermitteln, aufweist und dadurch, dass die Applikationsschicht (40) außerdem eine Prüfkomponente (46) aufweist, die ein Mittel (52) zum Lesen der Metadaten in dem getrennten Speicher und ein Mittel (54) zum Verarbeiten der gelesenen Metadaten aufweist,
und dadurch, dass die Sicherheitskomponente (44) "Nur-Schreiben"-Rechte in dem Prüfspeicher (50) hat und dadurch, dass die Prüfkomponente (46) "Nur-Lesen"-Rechte in dem Prüfspeicher (50) hat.

2. Sicherheitsgerät gemäß Anspruch 1, dadurch charakterisiert, dass das Mittel (54) zum Verarbeiten der gelesenen Metadaten dazu geeignet ist, Indikatoren mit Bezug auf die Funktion der Sicherheitskomponente zu erzeugen.

3. Sicherheitsgerät gemäß Anspruch 1, dadurch charakterisiert, dass das Mittel (54) zum Verarbeiten einen Schnittstellen-Piloten für eine Übertragung der gelesenen Metadaten an ein entferntes Überwachungsgerät (3) aufweist, das mit dem Sicherheitsgerät (10) verbunden ist.

4. Sicherheitsgerät gemäß einem der Ansprüche 1 bis 3, dadurch charakterisiert, dass eine Ausführungsdauer der Prüfkomponente (46) beschränkt ist, vorzugsweise auf 5% der CPU-Zeit pro Rahmen.

5. Sicherheitsgerät gemäß Anspruch einem der Ansprüche 1 bis 4, dadurch charakterisiert, dass die Sicherheitskomponente (44) eine Diode, eine Kryptographiemittel, ein Filter etc. aufweist.

6. Sicherheitsgerät gemäß einem der Ansprüche 1 bis 5,
dadurch charakterisiert, dass die Sicherheitskomponente (44) und die Prüfkomponente (46) Komponenten vom Typ Applikationskomponente sind.

## Claims

1. Security equipment (10) for partitioning the data transfers between first and second domains (1, 2) comprising:
- a hardware layer (20) comprising a computation means that comprises a processor and a hardware mechanism for compartmentalising the memory, and a storage means;
- a virtualisation layer (30) of said hardware layer comprising a hub and a virtual machine monitor;
- an application layer (40) comprising:
- a first interface component (41) for exchanging data with said first domain;
- a second interface component (42) for exchanging data with said second domain;
- a security component (44) forming a data exchange cell between said first and second components, said virtual machine monitor performing a temporal partitioning of the execution of said components, and said hardware mechanism for compartmentalising the memory performing a spatial partitioning of said components, **characterised in that** said security component (44) comprises a means (47) for generating operating metadata and a means (48) for writing said metadata in an audit memory (50) shared with said storage means, and **in that** said application layer (40) further comprises an audit component (46) comprising a means (52) for reading metadata in said shared memory and a means (54) for processing read metadata,
and **in that** said security component (44) has "write only" rights in said audit memory (50) and **in that** said audit component (46) has "read only" rights in said audit memory (50).

2. Security equipment according to claim 1, **characterised in that** said means (54) for processing read metadata is capable of generating indicators relating to the operation of said security component.

3. Security equipment according to claim 1, **characterised in that** said processing means (54) comprise an interface driver for transmitting read metadata to a remote monitoring facility (3) connected to said security equipment (10).

4. Security equipment according to any one of claims 1 to 3, **characterised in that** an execution duration of said audit component (46) is preferably limited to 5% of the CPU time per frame.

5. Security equipment according to any one of claims 1 to 4, **characterised in that** said security component (44) is formed of a diode, a cryptographic means, a filter, etc.

6. Security equipment according to any one of claims 1 to 5, **characterised in that** said security (44) and audit (46) components are components of the application component type.
